# EUROPÄISCHE PATENTANMELDUNG

(11) **EP 3 502 516 A1**
(43) Veröffentlichungstag der Anmeldung: **26.06.2019**
(21) Anmeldenummer: 17208430.3
(22) Anmeldetag: 19.12.2017
(51) Int. Cl.: F16H 57/08, F03D 1/06, F16H 57/025, F16H 57/031

(54) **PLANETENGETRIEBE, ANTRIEBSSTRANG UND WINDKRAFTANLAGE**

(71) Anmelder: Flender GmbH, 46395 Bocholt (DE)
(72) Erfinder: MEIS, Jean-Andre, 48249 Duelmen (DE)
(74) Vertreter: Maier, Daniel Oliver

(57) **Zusammenfassung**

Die Erfindung betrifft ein Planetengetriebe (10), das eine Hohlradfassung (16) und ein Hohlrad (18) zur Aufnahme mindestens eines Planetenrads (50) umfasst. Dabei ist die Hohlradfassung (16) stirnseitig mit einer Gehäusekomponente (20) verbindbar und an einer Stirnseite (30) der Hohlradfassung (16) ist eine Mehrzahl an Ausnehmungen (24) zur Aufnahme von Befestigungsmitteln (40, 42) ausgebildet. Erfindungsgemäß ist in mindestens einer der Ausnehmungen (24) ein Hohlelement (42) aufgenommen ist, im dem eine Schraube (40) aufgenommen ist. Die Erfindung betrifft auch einen Antriebsstrang (60) für eine Windkraftanlage (70), die mit einem entsprechenden Planetengetriebe (10) ausgestattet ist und eine entsprechende Windkraftanlage (70).

## Beschreibung

Die Erfindung betrifft ein Planetengetriebe, in dem ein Hohlrad mit einer Gehäusekomponente verbunden ist. Gleichermaßen betrifft die Erfindung einen Antriebsstrang einer Windkraftanlage, die mit einem entsprechenden Planetengetriebe ausgestattet ist. Die Erfindung betrifft auch eine Windkraftanlage, die über einen derartigen Antriebsstrang verfügt.

Aus EP 2 541 096 A1 ist ein Antriebssystem einer Windkraftanlage bekannt, das ein Planetengetriebe umfasst. Das Planetengetriebe umfasst ein Hohlrad, das in einem mantelförmigen Gehäuseabschnitt aufgenommen ist und mit einem axial äußeren Gehäuseabschnitt verbunden ist. Dazu ist das Hohlrad stirnseitig mit dem axial äußeren Gehäuseabschnitt verschraubt.

Die Druckschrift DE 10 2011 103 477 A1 offenbart eine elektrische Maschine, die eine Statoranordnung aufweist, die über einen Statorring verfügt, der wiederum mit einem Maschinengehäuse verbunden ist. In einem radial äußeren Bereich des Maschinengehäuses und des Statorrings sind Bohrungen angeordnet, in denen Schrauben aufgenommen sind. Ebenso sind in den Bohrungen Hohlstifte aufgenommen, durch die sich die Schrauben erstrecken.

In der Getriebetechnik besteht die Zielsetzung, bei gleichbleibender oder reduzierter Baugröße die von einem Getriebe übertragene mechanische Leistung zu erhöhen. Gleichzeitig wird angestrebt, die Lebensdauer des Getriebes zu erhöhen, den Wartungsaufwand zu verringern und die Geräuschentwicklung im Betrieb zu reduzieren. Derartige Verbesserungen sollen einfach, schnell und wirtschaftlich umgesetzt werden. Diese Anforderungen werden insbesondere an Planetengetriebe gestellt, die beispielsweise in Windkraftanlagen eingesetzt werden. Es besteht Bedarf an einem Planetengetriebe, das in mindestens einer der skizzierten Punkte eine technische Verbesserung bietet.

Diese Aufgabenstellung wird durch das erfindungsgemäße Planetengetriebe gelöst. Das Planetengetriebe umfasst eine Hohlradfassung, in der ein Hohlrad aufgenommen ist. Im Hohlrad ist mindestens ein Planetenrad drehbar aufgenommen, das an einem Planetenträger drehbar gelagert ist und im Betrieb des Planetengetriebes umläuft. Die Hohlradfassung ist stirnseitig mit einer Gehäusekomponente verbunden. An einer Stirnseite der Hohlradfassung ist hierzu eine Mehrzahl an Ausnehmungen ausgebildet, die zur Aufnahme von Befestigungsmitteln geeignet sind. Korrespondierend zu den Ausnehmungen in der Hohlradfassung sind auch Ausnehmungen in der Gehäusekomponente ausgebildet, die zur Aufnahme der Befestigungsmittel geeignet sind. Über die Befestigungsmittel wird im montierten Zustand eine lösbare Verbindung zwischen der Hohlradfassung und der Gehäusekomponente hergestellt. Gemäß der Erfindung sind in mindestens einer Ausnehmung als Befestigungsmittel ein Hohlelement und eine Schraube aufgenommen. Das Hohlelement ist derart ausgebildet und angeordnet, dass die Schraube im montierten Zustand im Hohlelement aufgenommen ist und sich durch das Hohlelement erstreckt. Durch das Hohlelement wird zwischen der Hohlradfassung und der Gehäusekomponente ein Formschluss hergestellt, der eine relative Verschiebung zwischen der Hohlradfassung und der Gehäusekomponente verhindert. Mittels der Schraube wird im montierten Zustand eine Anpresskraft zwischen der Hohlradfassung und der Gehäusekomponente hervorgerufen, so dass im Bereich des Kontakts zwischen der Hohlradfassung und der Gehäusekomponente eine Reibkraft hervorgerufen wird. Die Reibkraft wirkt auch einer relativen Verschiebung zwischen der Hohlradfassung und der Gehäusekomponente entgegen und verwirklicht einen Reibschluss. Unter einer Schraube sind hierbei auch sämtliche technischen Äquivalente zu verstehen, die dazu geeignet sind, in lösbarer Weise durch Montage eine Anpresskraft zwischen der Gehäusekomponente und der Hohlradfassung hervorzurufen, wie beispielsweise Bolzen oder Gewindebolzen.

Dadurch, dass sich die Schraube erfindungsgemäß durch das Hohlelement erstreckt, wird eine erhebliche Platzersparnis erzielt. Insbesondere werden im Wesentlichen an einer Stelle gleichzeitig ein Formschluss und ein Reibschluss erzeugt. Dies bietet ein hohes Maß an Stabilität und erlaubt es, erhöhte mechanische Beanspruchungen aufzunehmen, die durch die in das Planetengetriebe eingeleitete Wellenleistung hervorgerufen werden. Die Platzersparnis je Ausnehmung erlaubt es, an der Stirnseite der Hohlradfassung und der Gehäusekomponente, eine erhöhte Zahl an Befestigungsmittel einzusetzen. Hierdurch wird der enge Bauraum, in dem überhaupt Ausnehmungen für Befestigungsmittel technisch sinnvoll ausbildbar sind, effizienter genutzt. Hierdurch ist es insgesamt möglich, bei gleichbleibender Baugröße das Planetengetriebe für erhöhte Wellenleistungen zu nutzen. Ebenso führt die verbesserte Ausnutzung des Bauraums durch enger zueinander positionierbare Ausnehmungen und Befestigungsmittel dazu, dass die durch sie erzeugte Anpresskraft gleichmäßiger verteilt ist. Dadurch wird eine verbesserte Dichtwirkung zwischen der Hohlradfassung und der Gehäusekomponente hervorgerufen. Durch die Erfindung wird zwischen der Hohlradfassung und der Gehäusekomponente eine steifere Anbindung bereitgestellt, so dass zwischen diesen die Relativbewegungen reduziert sind. Infolgedessen werden im Betrieb Verformungen des Holrads verringert, was wiederum eine besseres Tragverhalten der Verzahnung am Hohlrad bewirkt. Dadurch werden konstruktiv auch höhere Sicherheiten in einer Verzahnung zwischen dem Hohlrad und dem mindestens einen Planetenrad erzielt, das in das Hohlrad eingreift. Dadurch, dass zwischen dem Hohlrad und dem mindestens einen Planetenrad im Betrieb auftretenden Relativbewegungen reduziert werden, tritt an Zähnen des Planetenrads und des Hohlrads ein reduzierter Verschleiß ein. Ferner wird die Geräuschentwicklung im Betrieb des Planetengetriebes durch die Erfindung reduziert.

In einer bevorzugten Ausführungsform des beanspruchten Planetengetriebes ist die mindestens eine Ausnehmung, in der das Hohlelement und die Schraube als Befestigungsmittel aufgenommen sind, im Bereich einer Drehmomentstütze des Planetengetriebes angeordnet. Die Drehmomentstütze dient dazu, das Planetengetriebe im Betrieb zu lagern und nimmt unter anderem die mechanischen Beanspruchungen infolge des vorliegenden Drehmoments und des Eigengewichts des Planetengetriebes auf. Im Bereich der Drehmomentstütze liegen eine Steifigkeitsänderung und eine entsprechend hohe mechanische Beanspruchung der Gehäusekomponente vor. Dies trifft insbesondere, bezogen auf eine Hauptdrehachse des Planetengetriebes, in einem Bereich zu, der die Drehmomentstütze azimutal beidseitig **um bis zu 20°** übergreift. Durch die beanspruchte Lösung wird in diesem Bereich eine besondere Verbesserung der Dichtwirkung erzielt. Des Weiteren werden durch erhöhte Wellenleistungen, die durch das Getriebe übertragen werden, auch die Lagerreaktionskräfte an der Drehmomentstütze gesteigert. Die skizzierte Lösung ist in vorteilhafter Weise dazu geeignet, den daraus resultierenden erhöhten mechanischen Beanspruchungen zuverlässig standzuhalten.

Darüber hinaus kann das Hohlelement als Hohlstift oder als Spannhülse ausgebildet sein. Ein Hohlstift bietet bei gleichen Außenabmessungen wie ein Zylinderstift eine nur geringfügig reduzierte Scherbelastbarkeit. Ein Aspekt des beanspruchten Planetengetriebes besteht darin, dass für die Dimensionierung eines Hohlstifts oder Zylinderstifts in der Verbindung zwischen der Hohlradfassung und der Gehäusekomponente meist nicht die maximal erträgliche Scherkraft, sondern die Flächenpressung maßgeblich ist, da der Gehäusewerkstoff deutlich geringere Festigkeiten als der Stift aufweist. Daraus ergibt sich die überraschende Erkenntnis, dass die gegenüber einem Zylinderstift reduzierte maximal erträgliche Scherkraft eines Hohlstifts unerheblich ist. Folglich basiert die beschriebe Ausführungsform auf der Nutzung eines scheinbar schwächeren Konstruktionselements, ohne dabei jedoch die Gesamttragfähigkeit der Verbindung zwischen der Hohlradfassung und der Gehäusekomponente zu reduzieren. Darüber hinaus bietet ein Hohlstift eine erhöhte Dichtwirkung, so dass beispielsweise ein Austritt von Getriebeöl durch die Ausnehmung hindurch vermieden wird. Eine Spannhülse als Hohlelement bietet die gleichen Vorteile wie ein Hohlstift. Zusätzlich ist die Spannhülse zusammendrückbar, was eine erleichtere Montage erlaubt. Ferner wird durch die Rückstellkraft der Spannhülse eine Selbstzentrierung erzielt und so der Montageaufwand weiter reduziert und eine verbesserte Dichtwirkung erreicht. Darüber hinaus können im beanspruchten Planetengetriebe Spannhülsen und Hohlstifte gemischt, also jeweils in unterschiedlichen Ausnehmungen, eingesetzt werden.

In einer weiteren Ausführungsform des beanspruchten Planetengetriebes ist das Hohlrad drehfest in der Hohlradfassung aufgenommen. Dadurch werden drehende Relativbewegungen zwischen dem Hohlrad und der Hohlradfassung auf ein Minimum reduziert und die in die Hohlradfassung eingeleiteten Beanspruchungen in das Hohlrad eingeleitet. In einer weiteren Ausführungsform können das Hohlrad und die Hohlradfassung auch einstückig, also integral, ausgebildet sein. Bei einer Hohlradfassung, die einstückig mit dem Hohlrad ausgebildet ist, entspricht die Breite der Stirnseite der Hohlradfassung im Wesentlichen der vorhandenen Materialstärke radial außerhalb eines Zahngrunds einer Hohlradverzahnung. Durch die erfindungsgemäße effiziente Nutzung des Bauraums, kann die Verbindung zwischen der Hohlradfassung und der Gehäusekomponente einreihig ausgeführt werden. Folglich ist es entbehrlich, radial beabstandet mehrere Ausnehmungen vorzusehen, also zwei Lochkreise vorzusehen. Demnach kann bei gleichbleibender oder sogar erhöhter Tragfähigkeit der Verbindung zwischen der Hohlradfassung und der Gehäusekomponente die Materialstärke der Hohlradfassung minimal gehalten werden. Hohlräder werden typischerweise aus einem gehärteten Werkstoff hergestellt, der eine aufwendige Bearbeitung erfordert. Insgesamt bietet die beanspruchte Lösung eine erhöhte mechanische Tragfähigkeit bei reduziertem Fertigungsaufwand.

Ferner kann im beanspruchten Planetengetriebe die Ausnehmung in der Hohlradfassung, in der als Befestigungsmittel ein Hohlelement und eine Schraube aufgenommen sind, als Bohrung ausgebildet sein. Die Bohrung kann dabei einen ersten und einen zweiten Bohrungsdurchmesser aufweisen. Ergänzend oder alternativ kann eine Ausnehmung in der Gehäusekomponente als Bohrung mit einem ersten und einem zweiten Bohrungsdurchmesser ausgebildet sein. Dabei ist der erste Bohrungsdurchmesser niedriger als der zweite Bohrungsdurchmesser. Im Bereich des ersten Bohrungsdurchmessers ist die Schraube aufgenommen und kann zumindest teilweise mit einem Innengewinde versehen sein. Im Bereich des zweiten Bohrungsdurchmessers ist das Hohlelement aufgenommen, das den Formschluss zwischen der Hohlradfassung und der Gehäusekomponente herstellt. Besonders bevorzugt liegt zwischen dem Bereich mit dem ersten Bohrungsdurchmesser und dem Bereich mit dem zweiten Bohrungsdurchmesser ein stufenförmiger Übergang vor. Ein stufenförmiger Übergang ist in einfacher Weise durch zwei separate Bohrvorgänge schnell herstellbar. Ferner bietet ein konischer Übergang zwischen den Bereichen mit dem ersten und zweiten Bohrungsdurchmesser einen verbesserten Kraftfluss und vermeidet Steifigkeitssprünge. Dadurch ist ein konischer Übergang mechanisch belastbarer, was eine weitere Steigerung der auftretenden Kräfte, und damit der vom Planetengetriebe übertragenen Wellenleistung erlaubt.

In einer weiteren bevorzugten Ausführungsform des Planetengetriebes weist die Stirnseite der Hohlradfassung eine radiale Breite auf, die einem 1,5-fachen bis 5,0-fachen des ersten oder zweiten Bohrungsdurchmessers entspricht. Der Einsatz des Hohlelements und der Schraube in einer Ausnehmung als Befestigungsmittel erlaubt es damit die Hohlradfassung besonders platzsparend und materialsparend herzustellen. Bei einer Hohlradfassung, die einstückig mit dem Hohlrad ausgebildet ist, ist unter der radialen Breite die radiale Abmessung von einer Außenfläche der Hohlradfassung zum Zahngrund der Hohlradverzahnung zu verstehen. Infolgedessen ist die beschriebene Lösung in besonders wirtschaftlicher Weise verwirklichbar. Alternativ kann die Stirnseite der Hohlradfassung eine radiale Breite aufweisen, die einem 3,0-fachen bis 8,0-fachen des Moduls der Verzahnung am Hohlrad oder am darin eingreifenden Planetenrad entspricht.

Darüber hinaus kann zwischen der Stirnseite des Hohlrads und der Gehäusekomponente eine reibwertsteigernde Beschichtung angeordnet sein. Die reibwertsteigernde Beschichtung kann dabei als Scheibe, Platte, Membran oder Folie ausgebildet sein. Derartige reibwertsteigernde Beschichtungen sind im Wesentlichen als metallische Folie ausgebildet, die mit einer Matrix beschichtet sind, in der Hartpartikel, beispielsweise Diamanten, angeordnet sind. Durch eine reibwertsteigernde Beschichtung, wie in den vorangegangenen Beispielen skizziert, wird die Reibkraft, die einer Relativbewegung der Hohlradfassung und der Gehäusekomponente entgegenwirken, erhöht. Dadurch, dass über Hohlelemente und darin aufgenommene Schrauben eine gleichmäßigere Verteilung der Anpresskraft an der Stirnseite der Hohlradfassung erzielt wird, werden dort Bereiche minimiert oder vermieden, in denen eine erforderliche Minimalanpresskraft für die reibwerterhöhende Beschichtung unterschritten wird. Infolgedessen erlaubt die beanspruchte Lösung es, reibwerterhöhende Beschichtungen in Form von Scheiben, Platten, Membranen und Folien in einem größeren Bereich auf der Stirnseite der Hohlradfassung wirkungsvoll einzusetzen. Insgesamt kann das technische Potential derartiger reibwerterhöhender Beschichtungen im beanspruchten Planetengetriebe weiter ausgeschöpft werden. Insgesamt werden so die oben skizzierten technischen Vorteile der beanspruchten Lösung weiter gesteigert.

Alternativ kann die reibwertsteigernde Beschichtung auch als Mikrostruktur ausgebildet sein, die durch ihre Geometrie eine lokale Reibwertsteigerung bietet. Mikrostrukturen bieten minimale Abmessungen und können je nach Bedarf unterschiedlich ausgestaltet werden. Beispielsweise können derartige Mikrostrukturen eine richtungsabhängige Reibwerterhöhung gewährleisten. Ferner kann im beanspruchten Planetengetriebe auch eine Kombination von mehreren unterschiedlichen reibwerterhöhenden Beschichtungen der zuvor beschriebenen Typen verwendet werden.

Des Weiteren kann die reibwertsteigernde Beschichtung als Ring, als Ringsegment, als Lochstreifen oder als Kreisbogensegment ausgebildet sein. Eine als Ring oder Ringsegment ausgebildete reibwertsteigernde Beschichtung kann in einfacher Weise unmittelbar um eine Ausnehmung herum angebracht werden und so lokal ein Maximum an Reibwertsteigerung erzielt werden. Ein Lochstreifen oder Kreisbogensegment als reibwertsteigernde Beschichtung erlaubt schnell und einfach eine flächendeckende Montage auf der Stirnseite. Eine derartige Formgebung der reibwerterhöhenden Beschichtung ermöglicht es, deren technisches Potential weiter auszunutzen.

In einer weiteren bevorzugten Ausführungsform des beanspruchten Planetengetriebes sind die Befestigungsmittel, also das Hohlelement und die Schraube derart ausgewählt, dass sich im montierten Zustand die Rötscher-Kegel von Befestigungsmitteln, insbesondere Schrauben, in benachbarten Ausnehmungen zumindest teilweise überlappen. Hierdurch wird eine gleichmäßige und hohe Anpresskraft erreicht. Weiter bevorzugt können die Schraube und das Hohlelement derart ausgebildet sein. Dass das Hohlelement vom Rötscher-Kegel der Schraube zumindest teilweise, bevorzugt vollständig, eingehüllt ist. Hierdurch wird eine gegenseitige mechanische Behinderung zwischen Schraube und Hohlelement vermieden und eine erhöhte Stabilität erzielt. Dies erfolgt durch geeignet Wahl der axialen Längen der Schraube und des Hohlelements.

Die beschriebene Aufgabenstellung wird auch durch einen Antriebsstrang für eine Windkraftanlage gelöst, der eine Rotorwelle umfasst, über die die Wellenleistung eines Rotors einem Planetengetriebe zugeführt wird. Dazu ist die Rotorwelle drehmomentübertragend mit dem Planetengetriebe verbunden. Das Planetengetriebe wiederum ist drehmomentübertragend mit einem Generator verbunden. Der Antriebsstrang ist im montierten Zustand in einer Gondel einer Windkraftanlage angeordnet. Erfindungsgemäß ist das Planetengetriebe des Antriebsstrangs gemäß einer der oben skizzierten Ausführungsformen des beanspruchten Planetengetriebes ausgebildet.

Gleichermaßen wird die Aufgabenstellung durch eine Windenergieanlage gelöst, die einen Rotor aufweist, der über ein Rotorlager mit einer Rotorwelle verbunden ist. Die Rotorwelle gehört dabei zu einem Antriebsstrang, der gemäß der oben beschriebenen Ausführungsform ausgebildet ist und mit einer Ausführungsform des erfindungsgemäßen Planetengetriebes ausgestattet ist.

Die Erfindung wird im Folgenden anhand von Figuren einzelner Ausführungsformen beschrieben. Die Merkmale der Figuren und der obenstehenden Beschreibung sind dabei in gegenseitiger Ergänzung zu lesen und sind ohne Weiteres untereinander kombinierbar. Es zeigt im Einzelnen:
- FIG 1: in einer Schrägansicht eine erste Ausführungsform des erfindungsgemäßen Planetengetriebes;
- FIG 2: im Längsschnitt eine Detailansicht der ersten Ausführungsform des erfindungsgemäßen Planetengetriebes;
- FIG 3: in einem Querschnitt eine zweite Ausführungsform des erfindungsgemäßen Planetengetriebes;
- FIG 4: in einem weiteren Querschnitt die zweite Ausführungsform des erfindungsgemäßen Planetengetriebes;
- FIG 5: eine Detailansicht einer dritten Ausführungsform der Erfindung;
- FIG 6: eine geschnittene Schrägansicht einer erfindungsgemäßen Windkraftanlage.

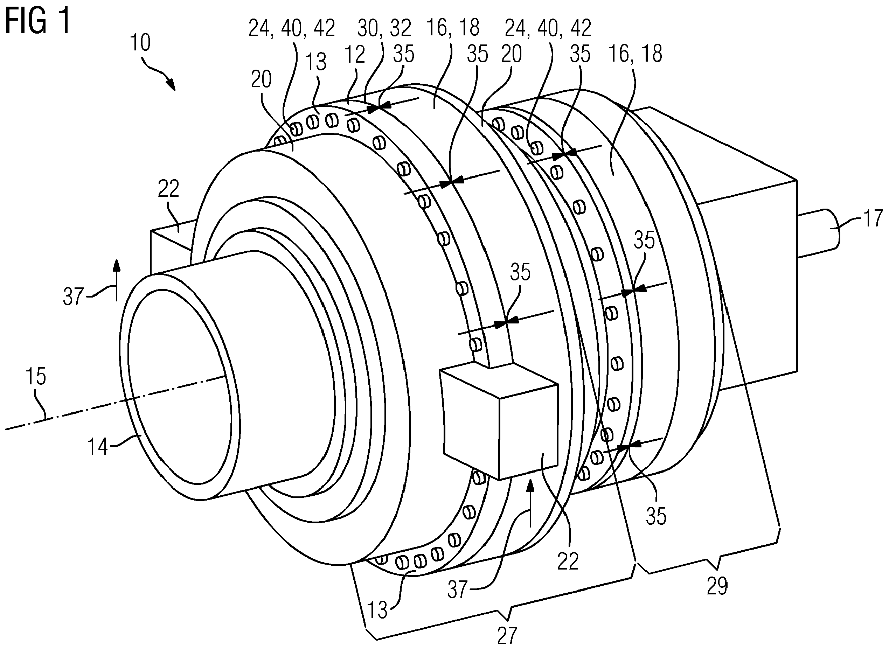

FIG 1 zeigt schematisch eine Schrägansicht einer ersten Ausführungsform des erfindungsgemäßen Planetengetriebes 10. Das Planetengetriebe 10 weist eine Eingangswelle 14 auf, die um eine Hauptdrehachse 15 drehbar ist. Die Eingangswelle 14 ist als Rotorwelle ausgebildet ist und mit einem nicht näher dargestellten Rotor 72 verbindbar ist. Über die Eingangswelle 14 wird im Betrieb ein Drehmoment in das Planetengetriebe 10 eingeleitet. Ferner verfügt das Planetengetriebe 10 über eine Ausgangswelle 17, an die mit einem nicht näher dargestellten Generator 74 verbindbar ist. Das Planetengetriebe 10 weist ein Gehäuse 12 auf, das eine Mehrzahl an Gehäusekomponenten 20 umfasst. Im Planetengetriebe 10 sind eine erste und eine zweite Planetenstufe 27, 29 angeordnet. Zu den beiden Planetenstufen 27, 29 gehört jeweils eine Hohlradfassung 16. In jeder der Hohlradfassungen 16 ist ein Hohlrad 18 aufgenommen. An der Hohlradfassung 16 der ersten Planetenstufe 27 ist eine Gehäusekomponente 20 angebracht, die in einem radialen Randbereich 13 eine Mehrzahl an Ausnehmungen 24 aufweist. Eine Stirnseite 30 der Hohlradfassung 16 liegt an einer Stirnseite 32 der Gehäusekomponente 20 an. In den Ausnehmungen 24 sind Befestigungsmittel 40, 42 angeordnet, die eine stabile und lösbare Verbindung zwischen der Hohlradfassung und der Gehäusekomponente 20 gewährleisten. Die Befestigungsmittel 40, 42 sind als Schrauben 40 und Hohlelemente 42 ausgebildet, wobei in jeder Ausnehmung 24 ein Hohlelement 42 aufgenommen ist. Durch jedes Hohlelement 42 erstreckt sich eine Schraube 40. Durch jedes Hohlelement 42 wird zwischen der Gehäusekomponente 20 und der Hohlradfassung 16 ein Formschluss erzeugt. Gleichzeitig wird durch die Schrauben 40 eine Anpresskraft 35 an den Stirnseiten 30, 32 zwischen der Hohlradfassung 16 und der Gehäusekomponente 20 hervorgerufen. Infolge der Anpresskraft 35 wird zwischen der Hohlradfassung 16 und der Gehäusekomponente 20 eine Reibkraft erzeugt, die eine Relativbewegung zwischen der Gehäusekomponente 12 und der Hohlradfassung 16 verhindert. An der ersten Planetenstufe 27 sind an der Gehäusekomponente 12 zwei Drehmomentstützen 22 angebracht, die zur Aufhängung des Planetengetriebes 10 dienen. Die Drehmomentstützen 22 nehmen unter anderem die durch das Eigengewicht des Planetengetriebes 10 bedingten Lagerreaktionskräfte 37 auf.

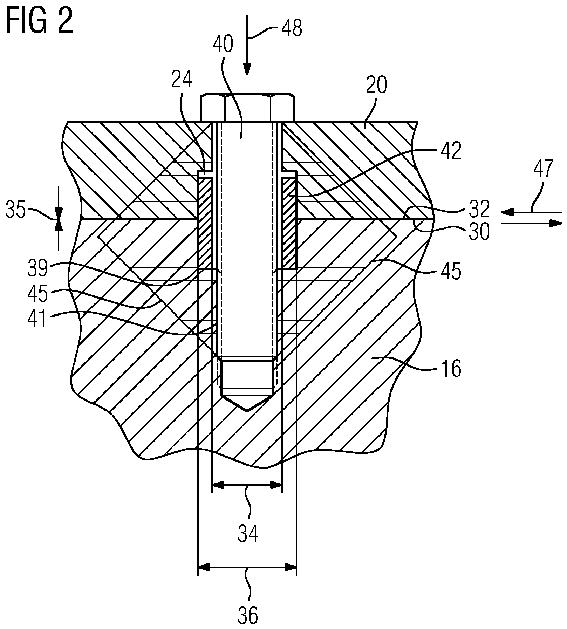

FIG 2 zeigt in einer Schnittdarstellung schematisch eine Detailansicht der Ausführungsform gemäß FIG 1. Gleiche Bezugszeichen haben in FIG 1 und FIG 2 die gleichen Bedeutungen. Es ist eine Verbindung zwischen der ersten Gehäusekomponente 20 und der Hohlradfassung 16 abgebildet, die eine Schraube 40 umfasst, die sich durch ein Hohlelement 42 erstreckt, das als Hohlstift ausgebildet ist. Die Schraube 40 greift an einem Ende in ein Innengewinde 41, das in der Ausnehmung 24 in der Hohlradfassung 16 ausgebildet ist. Die Ausnehmung 24 ist in der Hohlradfassung 16 und in der Gehäusekomponente 20 als Bohrung ausgebildet. Die Ausnehmung 24 in der Hohlradfassung 16 weist einen Bereich mit einem ersten Bohrungsdurchmesser 34 auf, in dem auch das Innengewinde 41 ausgebildet ist. Das Hohlelement 42 ist in der Hohlradfassung 16 in einem Bereich der Ausnehmung 24 positioniert, in dem die Ausnehmung 24 einen zweiten Bohrungsdurchmesser 36 aufweist, der größer ist als der erste Bohrungsdurchmesser 34. Zwischen dem Bereich mit dem ersten und dem zweiten Bohrungsdurchmesser 34, 36 ist ein stufenförmiger Übergang 39 ausgebildet. Entsprechende sind Bereiche mit einem ersten und zweiten Bohrungsdurchmesser 34, 36 in der Gehäusekomponente 20 ausgebildet. Das Hohlelement 42 ist auch in der Ausnehmung 24 in der Gehäusekomponente 20 aufgenommen und gewährleistet so einen Formschluss mit der Hohlradfassung 16 und der Gehäusekomponente 20. Ferner wird durch die Schraube 40 im montierten Zustand eine Anpresskraft 35 ausgeübt, durch die die Gehäusekomponente 20 und die Hohlradfassung 16 an ihren Stirnsteiten 30, 32 aneinander gedrückt werden. Die Anpresskraft 35 ruft so eine Reibkraft hervor, die in der Ebene der Stirnseiten 30, 32 wirkt und somit einen Kraftschluss verwirklicht. Das Zusammenspiel des Formschlusses durch das Hohlelement 42 und den Kraftschluss durch die Schraube 40 verhindert eine Relativbewegung 47 der Hohlradfassung 16 und der Gehäusekomponente 20 zueinander. Damit erfordert die Ausnehmung 24 nur Platz für ein Befestigungsmittel 40, 42, nämlich für das Hohlelement 42, nimmt jedoch zwei Befestigungsmittel 40, 42 auf. Die Schraube 40 und das Hohlelement 42 sind derart ausgebildet und positioniert, dass das Hohlelement 42 vollständig vom Rötscher-Kegel 45 der Schraube 40 eingehüllt ist. Ferner ist das Hohlelement 42 derart ausgebildet, dass im montierten Zustand entlang einer Montagerichtung 48 eine Spielpassung vorliegt. Hierdurch ist gewährleistet, dass das Hohlelement 42 die von der Schraube 40 gebildete kraftschlüssige Verbindung nicht behindert.

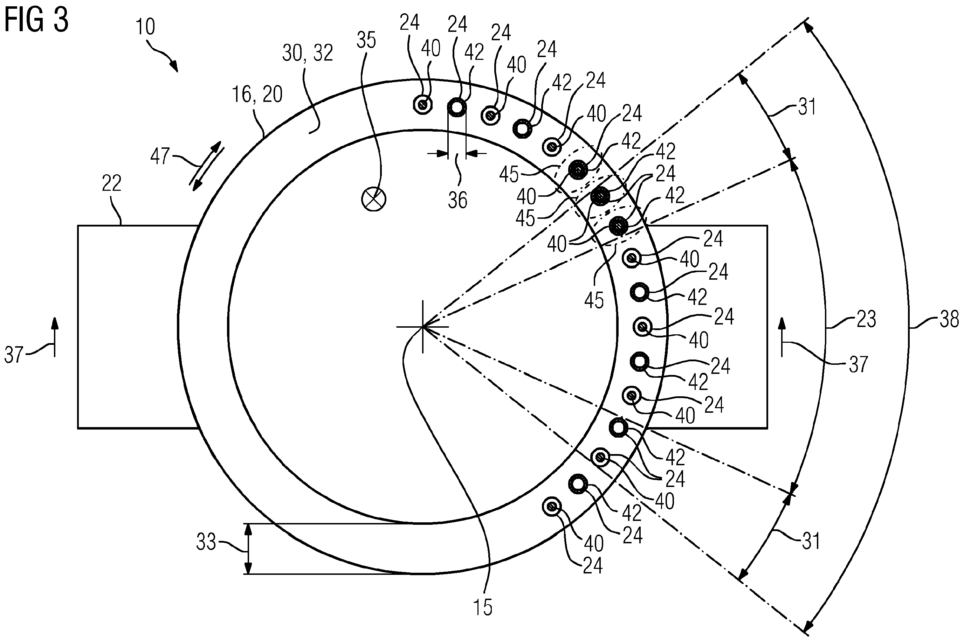

In FIG 3 ist eine zweite Ausführungsform des erfindungsgemäßen Planetengetriebes 10 schematisch in einem Querschnitt dargestellt. Die Darstellung in FIG 3 ist ein Querschnitt in einer Kontaktebene zwischen der Stirnseite 32 der Gehäusekomponente 20 und der daran anliegenden Stirnseite 30 der nicht näher dargestellten Hohlradfassung 16. Gleiche Bezugszeichen haben in FIG 1, FIG 2 und FIG 3 gleiche Bedeutungen. Die Gehäusekomponente 20 weist Ausnehmungen 24 auf, in denen Befestigungsmittel 40, 42 aufgenommen sind und im Wesentlichen mittig auf der Stirnseite 32 angeordnet sind. An die Gehäusekomponente 20 sind Drehmomentstützen 22 angeformt, die dazu geeignet sind, die durch das im Betrieb über die Eingangswelle 14 eingeleitete Drehmoment und/oder das Eigengewicht des Planetengetriebes 10 bedingten Lagerreaktionskräfte 37 aufzunehmen. Die Drehmomentstützen 22 definieren jeweils die Lage eines Stützbereichs 23, in dem die Drehmomentstützen 22 positioniert sind. Der Übergangsbereich 23 ist über einen Winkel bezogen auf die Hauptdrehachse 15 des Planetengetriebes 10 definiert. An den Stützbereich 23 schließt sich beidseitig ein Übergangsbereich 31 an, in dem, so wie im Stützbereich 23, im Betrieb erhöhte mechanische Beanspruchungen auftreten. Der Stützbereich 23 und die angrenzenden Übergangsbereiche 31 bilden einen zusammenhängenden Kombinationsbereich 38. Im Kombinationsbereich 38 sind in Ausnehmungen 24 ein Hohlelement 42 und eine Schraube 40 aufgenommen. Dabei erstreckt sich die Schraube 40, wie beispielsweise in FIG 2 dargestellt, durch das Hohlelement 42. Eine derartige Anordnung von Befestigungsmitteln 40, 42 bietet ein hohes Maß an Stabilität gegen eine Relativbewegung 47 der Gehäusekomponente 20 gegenüber der nicht näher dargestellten Hohlradfassung 16. Die in den Ausnehmungen 24 aufgenommenen Hohlelemente 42 bieten ferner eine erhöhte Dichtwirkung, und verhindern so den Austritt von Getriebeöl aus dem Planetengetriebe 10. Ferner weist die Stirnseite 32 der Gehäusekomponente 20 eine radiale Breite 33 auf, die im Wesentlichen dem 1,5-fachen bis 5,0-fachen eines zweiten Bohrungsdurchmessers 36, der im Wesentlichen einem Durchmesser des Hohlelements 42 entspricht Die Stirnseite 32 weist damit eine reduzierte radiale Breite 33 auf und bietet gleichzeitig ein hohes Maß an Stabilität gegen Relativbewegungen 47 zwischen der Gehäusekomponente 20 und der Hohlradfassung 16. Die Schrauben 40, die in den Hohlelementen 42 aufgenommen sind, bilden Rötscher-Kegel 45 aus, deren Projektion in FIG 3 dargestellt sind. Die Rötscher-Kegel 45 von Schrauben 40, die in benachbarten Hohlelementen 42 aufgenommen sind, überlappen sich teilweise. Es besteht somit eine gleichmäßige Verteilung einer nicht näher abgebildeten Anpresskraft 35 zwischen der Gehäusekomponente 20 und der Hohlradfassung 16, wodurch die Dichtwirkung der Verbindung weiter gesteigert wird.

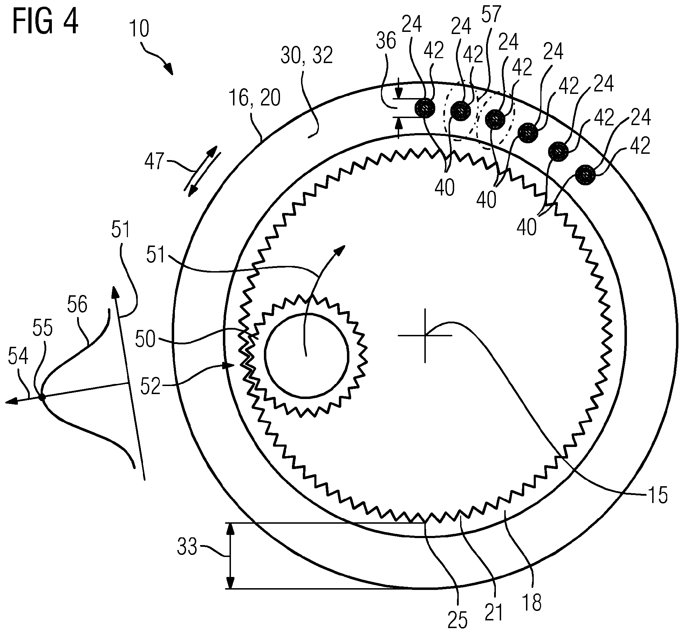

FIG 4 zeigt schematisch die zweite Ausführungsform des erfindungsgemäßen Planetengetriebes 10 in einem weiteren Querschnitt. ist Die Darstellung in FIG 3 ist ein Querschnitt in einer Kontaktebene zwischen der Stirnseite 32 der nicht näher dargestellten Gehäusekomponente 20 und der daran anliegenden Stirnseite 30 der Hohlradfassung 16. FIG 3 und FIG 4 stellen somit schematisch aneinander angrenzende Querschnitte des Planetengetriebes 10 dar. Die FIG 3 und FIG 4 sind in gegenseitiger Ergänzung aufzufassen. Gleiche Bezugszeichen in FIG 1, 2, 3 und 4 haben deshalb die gleiche technische Bedeutung. In der Hohlradfassung 16 ist ein Hohlrad 18 angeordnet, das mit der Hohlradfassung einstückig ausgebildet ist. Das Hohlrad 18 weist eine umlaufende Hohlradverzahnung 21 auf, die aus einem gehärteten Werkstoff herstellbar ist. In die Hohlradverzahnung 21 greift ein schematisch dargestelltes Planetenrad 50 ein, wobei in einem Kontaktbereich 52 im Bereich eines Zahngrunds 25 eine mechanische Beanspruchung 56 hervorgerufen wird. Die mechanische Beanspruchung 56 ist schematisch an einer Größenachse 54 abgebildet. Ferner weist die mechanische Beanspruchung 56 im Kontaktbereich 52 eine Lastverteilung 56 mit einem Beanspruchungsmaximum 55 auf. Das Planetenrad 50 bewegt sich im Betrieb des Planetengetriebes 10 in eine Umlaufrichtung 51, so dass das Beanspruchungsmaximum 55 dem Planetenrad 50 folgt. Der Umlauf des Beanspruchungsmaximums 55 stellt eine zyklische Beanspruchung des Hohlrads 18 und der Hohlradfassung 16 dar. Korrespondierend zu den Ausnehmungen 24 in der Gehäusekomponente 20 in FIG 3 sind auf der Stirnseite 30 der Hohlradfassung 16 Ausnehmungen 24 ausgebildet. Auch in den Ausnehmungen 24 in der Hohlradfassung 16 sind die Befestigungsmittel 40, 42 aufgenommen, die in der Gehäusekomponente 20 angebracht sind. Die Hohlelemente 42 und die Schrauben 40 sind durch ihre Dimensionierung dazu ausgebildet, im Betrieb einer statischen Last 57 standzuhalten, die vom umlaufenden Beanspruchungsmaximum 55 zyklisch überlagert wird. Dabei sind die Verbindungen mit den Hohlelementen 42 und den Schrauben 40 dauerfest. So wird dauerhaft einer Relativbewegung 47 zwischen der Hohlradfassung 16 und der Gehäusekomponente 20 entgegengewirkt. Die radiale Breite 33 der Hohlradfassung 16 mit dem Hohlrad 18 beträgt zwischen dem 1,5-fachen und dem 5,0-fachen eines zweiten Bohrungsdurchmessers 36, der dem Durchmesser eines Hohlelements 42 entspricht. Die radiale Breite 33 ist durch den Abstand von einer Außenfläche der Hohlradfassung bis zum Zahngrund 25 des Hohlrads 18 definiert.

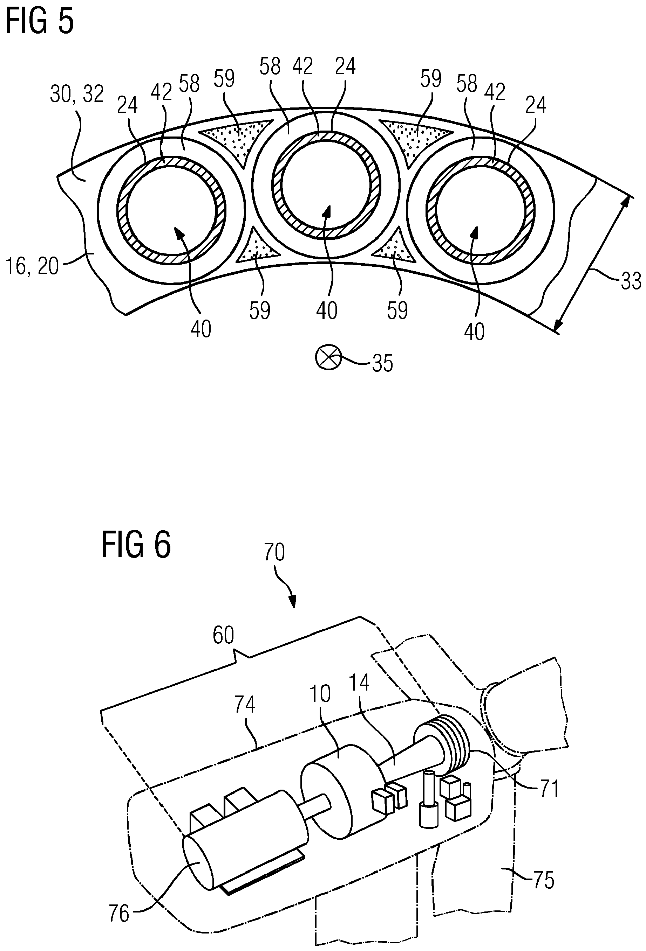

In FIG 5 ist eine Detailansicht einer dritten Ausführungsform der Erfindung dargestellt. Auf einer Stirnseite 30, 32 einer Hohlradfassung 18 oder einer Gehäusekomponente 20 sind Ausnehmungen 24 ausgebildet, in denen Hohlelemente 42 aufgenommen sind und dazu geeignet sind, nicht näher dargestellte Schrauben 40 aufzunehmen. Die Ausnehmungen 24 sind jeweils von einer reibwertsteigernden Beschichtung 58 umgeben, die als Scheiben in Ringform ausgebildet sind. Diese erstrecken sich im Wesentlich über die gesamte radiale Breite 33 und gewährleisten so eine erhöhte Reibkraft in der Ebene der Stirnseite 30, 32. Dadurch, dass in den Ausnehmungen 24 Hohlelemente 42 und Schrauben 40 gleichzeitig als Befestigungsmittel 40, 42 aufgenommen sind, ist eine gleichmäßige Verteilung einer Anpresskraft 35 gewährleistet. Im Gegensatz hierzu bieten aus dem Stand der Technik bekannte Lösungen, bei denen massive Stifte statt Hohlelemente 42 eingesetzt werden, keine hinreichende Mindestpressung, die für eine zuverlässige Verwendung von reibwertsteigernden Beschichtungen 58 erforderlich sind. Die vorteilhafte Wirkung der Hohlelemente 42 wird so durch die Scheiben mit der reibwerterhöhenden Beschichtung 58 weiter gesteigert. Zusätzlich ist die Oberfläche der Stirnseite 30, 32 mit Mikrostrukturen 59 versehen, die auch als reibwerterhöhende Beschichtung dienen. Die Mikrostrukturen 59 sind mittels Laser-Bearbeitung oder spanende Bearbeitung herstellbar. Die mechanischen Eigenschaften der Mikrostrukturen 59 sind durch eine entsprechende Ausgestaltung des Herstellungsverfahrens anpassbar. Beispielsweise ist eine richtungsabhängige Reibwertsteigerung möglich.

FIG 6 zeigt in einer geschnittenen Schrägansicht eine Ausführungsform einer erfindungsgemäßen Windkraftanlage 70. Die Windkraftanlage 70 weist einen Rotor 75 auf, der über ein Rotorlager 71 mit einer Rotorwelle 14 verbunden ist. Die Rotorwelle 14 dient einem Planetengetriebe 10 als Eingangswelle. Das Planetengetriebe 10 wiederum ist mit einem Generator 76 mechanisch verbunden. Das Rotorlager 71, die Rotorwelle 14, das Planetengetriebe 10 und der Generator 76 gehören zu einem Antriebsstrang 60, der in einer Gondel 70 der Windkraftanlage 70 angeordnet ist. Das Planetengetriebe 10 ist dabei gemäß einer Ausführungsform der Erfindung ausgebildet.

## Patentansprüche

1. Planetengetriebe (10), umfassend eine Hohlradfassung (16) und ein Hohlrad (18) zur Aufnahme mindestens eines Planetenrads (50), wobei die Hohlradfassung (16) stirnseitig mit einer Gehäusekomponente (20) verbindbar ist, und an einer Stirnseite (30) der Hohlradfassung (16) eine Mehrzahl an Ausnehmungen (24) zur Aufnahme von Befestigungsmitteln (40, 42) ausgebildet ist, **dadurch gekennzeichnet, dass** in mindestens einer der Ausnehmungen (24) ein Hohlelement (42) aufgenommen ist, im dem eine Schraube (40) aufgenommen ist.

2. Planetengetriebe (10) nach Anspruch 1, **dadurch gekennzeichnet, dass** die mindestens eine Ausnehmung (24) mit dem darin aufgenommenen Hohlelement (42) und der Schraube (40) in einem Bereich einer Drehmomentstütze (22) angeordnet ist.

3. Planetengetriebe (10) nach Anspruch 1 oder 2, **dadurch gekennzeichnet, dass** das Hohlelement (42) als Hohlstift oder als Spannhülse ausgebildet ist.

4. Planetengetriebe (10) nach einem der Ansprüche 1 bis 3, **dadurch gekennzeichnet, dass** das Hohlrad (18) drehfest in der Hohlradfassung (16) aufgenommen ist oder einstückig mit der Hohlradfassung (16) ausgebildet ist.

5. Planetengetriebe (10) nach einem der Ansprüche 1 bis 4, **dadurch gekennzeichnet, dass** die mindestens eine Ausnehmung (24) in der Hohlradfassung (16) und/oder in der Gehäusekomponente (20) als Bohrung mit einem ersten und einem zweiten Bohrungsdurchmesser (34, 36) ausgebildet ist.

6. Planetengetriebe (10) nach Anspruch 5, **dadurch gekennzeichnet, dass** zwischen einem ersten Bereich mit dem ersten Ausnehmungsdurchmesser (34) und einem zweiten Bereich mit dem zweiten Ausnehmungsdurchmesser (36) ein stufenförmiger oder ein konischer Übergang (39) ausgebildet ist.

7. Planetengetriebe (10) nach einem der Ansprüche 1 bis 6, **dadurch gekennzeichnet, dass** die Stirnseite (30) der Hohlradfassung (16) eine radiale Breite (33) aufweist, die einem 1,5-fachen bis 5,0-fachen des ersten oder zweiten Bohrungsdurchmesser (34, 36) entspricht, oder einem 3,0-fachen bis 8,0-fachen eines Moduls einer Verzahnung am Planetenrad (50) und/oder Hohlrad (18) entspricht.

8. Planetengetriebe (10) nach einem der Ansprüche 1 bis 7, **dadurch gekennzeichnet, dass** zwischen der Stirnseite (30) der Hohlradfassung (16) und der Gehäusekomponente (20) eine reibwertsteigernde Beschichtung (58, 59) angeordnet, die als Scheibe, Platte, Membran, Folie oder als Mikrostruktur ausgebildet ist.

9. Planetengetriebe (10) nach Anspruch 8, **dadurch gekennzeichnet, dass** die reibwertsteigernde Beschichtung (58, 59) als Ring, als Ringsegment, als Lochstreifen oder als Kreisbogensegment ausgebildet ist.

10. Planetengetriebe (10) nach einem der Ansprüche 1 bis 9, **dadurch gekennzeichnet, dass** sich im montierten Zustand Rötscher-Kegel (45) von Befestigungsmitteln (40, 42) in zwei benachbarten Ausnehmungen (24) gegenseitig teilweise überlappen.

11. Planetengetriebe (10) nach einem der Ansprüche 1 bis 10, **dadurch gekennzeichnet, dass** das Hohlelement (42) und die Schraube (40) derart ausgebildet sind, dass im montierten Zustand das Hohlelement (42) vom Rötscher-Kegel (45) der Schraube (40) zumindest teilweise, vorzugsweise vollständig, eingehüllt ist.

12. Antriebsstrang (60) für eine Windkraftanlage (70), umfassend eine Rotorwelle (14), die drehmomentübertragend mit einem Planetengetriebe (10) verbunden ist, das drehmomentübertragend mit einem Generator (76) verbunden ist, **dadurch gekennzeichnet, dass** das Planetengetriebe (10) nach einem der Ansprüche 1 bis 11 ausgebildet ist.

13. Windkraftanlage (70), umfassend einen Rotor (75), der über ein Rotorlager (71) mit einer Rotorwelle (14) eines Antriebsstrangs (60) verbunden ist, **dadurch gekennzeichnet, dass** der Antriebsstrang (60) nach Anspruch 12 ausgebildet ist.
